Europäisches Patentamt

European Patent Office

Office européen des brevets

(19)

(11) Numéro de publication : **0 202 309**
**B1**

(12) **FASCICULE DE BREVET EUROPÉEN**

(45) Date de publication du fascicule du brevet :
**15.03.89**

(51) Int. Cl.⁴ : **F 16 C   1/06**

(21) Numéro de dépôt : **85906072.5**

(22) Date de dépôt : **02.12.85**

(86) Numéro de dépôt international :
**PCT/FR 85/00345**

(87) Numéro de publication internationale :
**WO/8603266 (05.06.86 Gazette 86/12)**

(54) **DISPOSITIF DE TRANSMISSION MECANIQUE D'UN MOUVEMENT DE ROTATION.**

(30) Priorité : 30.11.84 FR 8418251
18.01.85 FR 8500686
11.02.85 FR 8501878
29.04.85 FR 8506476
07.08.85 FR 8512107

(43) Date de publication de la demande :
**26.11.86 Bulletin 86/48**

(45) Mention de la délivrance du brevet :
**15.03.89 Bulletin 89/11**

(84) Etats contractants désignés :
**AT BE CH DE FR GB IT LI LU NL SE**

(56) Documents cités :
AU–A–   488 488
FR–A– 1 583 167
GB–A– 2 015 699
US–A– 2 573 361
US–A– 3 043 120
US–A– 4 112 708
US–A– 4 424 045
Power, Vol.113, No.8, août 1969, New York (US), W. O'Keefe: "Flexible shafts take mechanical drive power", page 64

(73) Titulaire : **GOULET, Michel**
**18, rue Nélaton**
**F-75015 Paris (FR)**

(72) Inventeur : **GOULET, Michel**
**18, rue Nélaton**
**F-75015 Paris (FR)**

(74) Mandataire : **Viard, Jean**
**Cabinet VIARD 28 bis, avenue Mozart**
**F-75016 Paris (FR)**

## Description

La présente invention a pour objet un dispositif de transmission d'un mouvement de rotation, en particulier, mais non exclusivement, de type flexible.

La transmission d'un mouvement de rotation d'un organe moteur à un organe utilisateur est un problème très général dans la technique. Dans le cas où les organes à réunir ne sont pas alignés, la transmission est obtenue par des montages compliqués du type cardan. On connaît également des liaisons souples appelées flexibles, qui ont la propriété de pouvoir se déformer pour s'adapter à la position des organes.

Malheureusement, au cours de la transmission des efforts, l'âme généralement constituée par un câble d'acier entouré par une tresse, emmagasine par élasticité une certaine quantité d'énergie de sorte que l'on a constaté, dans certains cas, que ces flexibles se brisaient, cette cassure provenant de la libération de l'énergie emmagasinée par élasticité à l'intérieur du câble et de la tresse acier.

La transmission d'un tel mouvement se fait lorsqu'il s'agit d'efforts peu importants ne nécessitant qu'une installation temporaire à l'aide d'un flexible comprenant une âme en acier sur laquelle sont tressées deux tresses de pas opposé également en acier permettant au flexible de tourner dans les deux sens, ces tresses étant montées à l'intérieur d'une gaine, mais, outre que ces flexibles sont relativement peu souples, ils ne peuvent travailler convenablement que dans une direction sensiblement rectiligne et n'admettant que des courbures peu prononcées.

On a déjà proposé, dans le brevet GB-A-2015699 de réduire le poids du flexible en bobinant sur l'âme des torons de monofilaments de fibres thermoplastiques pour former des couches successives de fils bobinés, le noyau étant inclus dans une gaine fixe, également en plastique, un espace permettant au noyau revêtu des couches de fil plastique de tourner à l'intérieur de la gaine.

Si cette disposition réduit le poids du flexible, celui-ci présente le même inconvénient que les flexibles en acier, c'est-à-dire que le noyau et les couches de fils plastiques emmagasinent du fait de leur élasticité de l'énergie, énergie qui peut se libérer de façon accidentelle et provoquer la rupture du flexible.

La présente invention a pour objet de pallier cet inconvénient.

De préférence, les fibres de polyamide aromatique sont des fibres de « Kevlar » (Marque Déposée par la firme Dupont de Nemours). On sait en effet que de telles fibres présentent une résistance en traction égale ou supérieure à celle des fils d'acier avec un poids très inférieur. Par contre leur module d'élasticité est très faible. La présente invention met à profit ces caractéristiques connues pour transmettre un mouvement de rotation.

Etant donné que le Kevlar présente une élongation à la rupture en % qui varie sensiblement entre 2 et 4, ce matériau n'a pas la possibilité d'emmagasiner de l'énergie et reste constamment inerte. Il en résulte que l'inconvénient signalé ci-dessus pour les flexibles à câble d'acier n'existe plus dans le cas où l'on utilise une spirale de Kevlar pour transmettre le mouvement.

Selon une autre caractéristique de la présente invention, le dispositif comprenant une âme sur laquelle est enroulée une spirale de Kevlar est caractérisé en ce que la gaine extérieure est incompressible.

Bien entendu la gaine doit rester flexible et l'incompressibilité peut résulter de différents moyens et par exemple de l'incorporation de fils métalliques dans une gaine de plastique, les fils métalliques s'étendant parallèlement à la direction longitudinale du flexible. Il faut en effet qu'il n'y ait aucune variation de longueur de la gaine lors du travail, celle-ci restant identique à la longueur en direction longitudinale du câble ou de l'âme de rotation.

Pratiquement, l'extrémité du câble en Kevlar est coulée dans un culot de compound qui assure son immobilisation par rapport à l'âme sur laquelle la spirale est enroulée. Les culots de compound reposent par exemple sur des roulements prévus sur les embouts des extrémités du flexible.

La gaine extérieure entourant la spirale de Kevlar est incompressible et conserve une longueur identique à celle du câble intérieur lors du fonctionnement. Elle peut être elle-même flexible dans le cas où le moteur et/ou l'organe utilisateur sont mobiles. La gaine peut également être constituée par un tuyau rigide (éventuellement constitué d'éléments démontables) reliant rigidement l'organe moteur et l'organe utilisateur, par exemple dans un avion.

Un second objet de la présente invention est un dispositif de liaison entre un moteur électrique et un appareil quelconque qui soit souple, léger et isolant. On est ainsi sûr que même s'il se produit un défaut d'isolation, l'usager ne court aucun risque.

Pour la transmission de couples importants on a observé que malgré l'inélasticité du Kevlar, le flexible avait tendance à se voiler ou à se vriller, ce qui est à éviter.

Selon une autre caractéristique de l'invention, le flexible est caractérisé en ce que le noyau est constitué par des fibres parallèles de Kevlar entourées par une gaine de fibres de verre.

De préférence, les fibres de Kevlar destinées à assurer la rotation sont regroupées en un ensemble de spirales adjacentes. Cette particularité permet de diminuer la section de la spire de Kevlar en répartissant les spirales tout au long du noyau.

Comme précédemment, ces spirales sont incluses dans une gaine de Teflon ou autre matériau à faible coefficient de friction, pouvant tourner sur des bagues prévues à l'intérieur de la gaine extérieure. La gaine intérieure peut également inclure des excroissances régulièrement espacées qui forment des paliers dans la gaine extérieure.

Il s'est avéré que l'invention pouvait trouver de nombreuses applications, notamment en robotique et en aéronautique où le gain de poids du flexible par rapport aux flexibles traditionnels est un avantage décisif.

Mais ces applications nécessitent souvent la transmission de forces considérables. La solution immédiate consisterait à augmenter la section du fil de Kevlar constituant la spirale de transmission de forces orientée en sens inverse du mouvement de rotation à transmettre. Malheureusement, cette augmentation de la section du fil de Kevlar se traduit par une augmentation du diamètre du flexible qui peut également être un paramètre crucial dans les applications considérées.

Selon une autre caractéristique de l'invention, le flexible de transmission d'un mouvement rotatif est caractérisé en ce que sur le noyau sont enroulées au moins deux spirales parallèles et de même sens d'enroulement, opposé au sens de transmission du mouvement de rotation.

Ainsi, la résistance à la rupture du flexible peut être multipliée par deux ou « n » si il existe « n » spirales. Bien entendu, la longueur de chaque spirale est également divisée par « n » de sorte que la longueur totale de fibres Kevlar n'est pas accrue et peut même être légèrement diminuée si le pas de chacune des spirales est égal à n fois le pas d'une spirale unique. Ainsi, bien que la résistance soit multipliée par 2 ou, n, n étant de préférence égal à 3 ou 4, le diamètre extérieur n'augmente pas et le poids n'augmente pas.

Cette possibilité provient des caractéristiques du Kevlar qui peut travailler dans deux directions alors que le métal et, notamment l'acier supporte difficilement des contraintes qui ne sont pas unidirectionnelles.

Par ailleurs, la multiplicité des brins est extrêmement favorable à l'insertion de leurs extrémités dans un culot de compound.

Eventuellement, une spirale composée de quelques fibres de Kevlar peut être torsadée en sens inverse uniquement pour maintenir les spires à une distance régulière l'une de l'autre, mais sans participer directement à la transmission du mouvement.

Dans tous les cas, afin de conserver le mode d'action des fils de Kevlar, l'angle que forme les spires avec le plan vertical de section transversale du flexible doit être de l'ordre de 30°. Dans ces conditions, l'effort transmis par les spirales s'exerce radialement et non longitudinalement comme dans les câbles connus contenant au moins une partie de Kevlar.

Il est ainsi possible d'utiliser les propriétés du Kevlar en matière de résistance à la traction, d'autant que celui-ci ne s'allonge pratiquement pas jusqu'au seuil de sa rupture de charge. C'est-à-dire qu'au cas où un couple trop important serait appliqué sur la spirale, celle-ci se romperait mais sans libération d'énergie.

Selon une autre caractéristique de l'invention, le flexible de transmission d'un mouvement rotatif est caractérisé en ce qu'entre le noyau et la spirale se trouve comprimée une gaine solidaire par collage ou tout autre procédé (extrusion par exemple) de matière souple élastique, et fort coefficient de durcissement à la compression du genre caoutchouc synthétique.

Il en résulte qu'au fur et à mesure que la sollicitation à l'effort augmente, le caoutchouc est comprimé. L'âme en amorçant une hélicoïdalisation sur elle-même tend à se raccourcir et à augmenter de diamètre mais suffisamment pour contribuer à la compression et par là même à un durcissement substantiel du caoutchouc. La spirale de Kevlar se resserre, les spires ayant tendance à se rapprocher l'une de l'autre et comprime elle aussi la paroi extérieure de la gaine de caoutchouc que nous avons évoquée plus haut. De préférence, la gaine utilisée est une gaine à double agrafage du type « gaine Rudolph » en acier inox 18/10, et que celle-ci a la propriété de durcir quand elle est soumise à un effort de compression. Même lorsque le flexible est replié sur lui-même à 270° et plus, il ne risque pas de se mettre en autospiralisation aussi bien intérieure (autospiralisation de l'axe mobile à l'intérieur de la gaine ce qui est le prélude quasi-systématique de cassure de tous les flexibles conventionnels) qu'extérieure, ce qui se produit avec les gaines conventionnelles quand pour une raison quelconque la partie mobile accroche à l'intérieur de la gaine. Par ailleurs, le phénomène d'auto-serrage extérieur de la partie mobile (la partie mobile étant toujours la partie rotative) entraîne au fur et à mesure que l'effort augmente, outre un durcissement de l'ensemble dans quelque configuration que ce soit, une diminution sensible des forces de frottement.

D'autres caractéristiques et avantages de la présente invention apparaîtront au cours de la description qui va suivre d'un mode particulier de réalisation, donné uniquement à titre d'exemple non limitatif, en regard des dessins qui représentent :

— La Fig. 1, une vue partielle en perspective d'un dispositif de liaison selon l'invention ;

— La Fig. 2, un schéma de fonctionnement ;

— La Fig. 3, un exemple d'application ;

— La Fig. 4, un moyen de connexion d'un flexible sur un appareil utilisateur.

— La Fig. 5, un autre mode de réalisation du noyau.

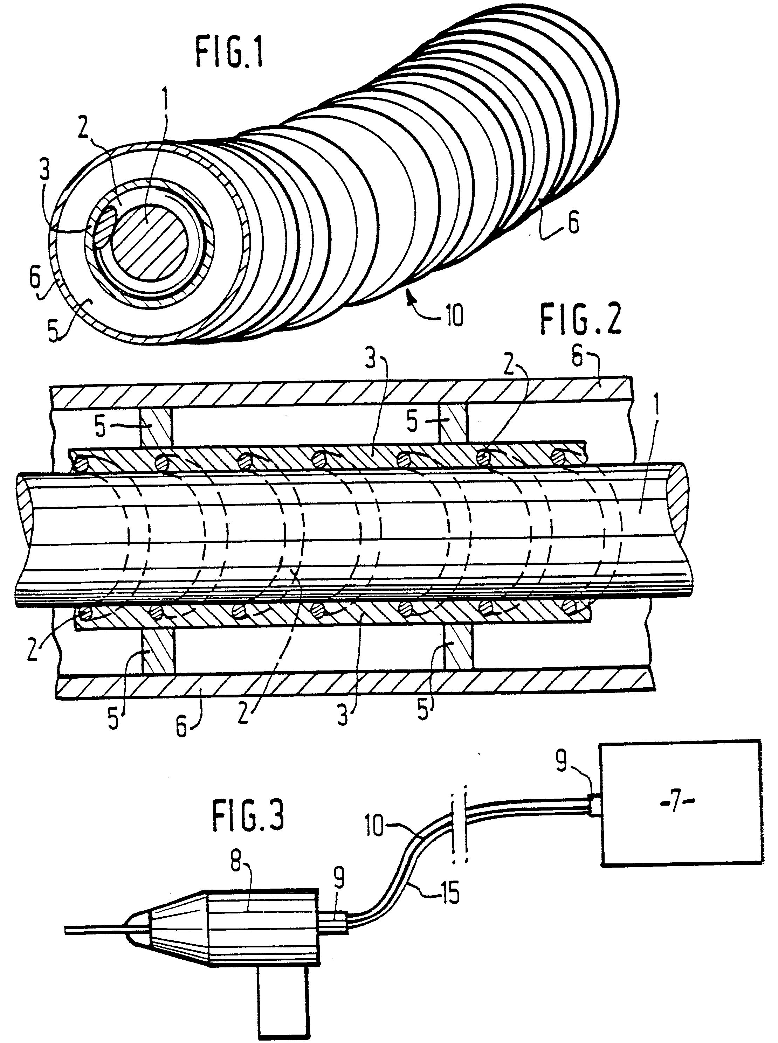

Sur les Figs 1 et 2, qui représentent un tronçon de flexible selon l'invention, on voit que ce flexible se compose d'un noyau 1 s'étendant le long du flexible et qui peut être constitué par exemple en corde à piano.

Sur le noyau 1 est bobinée une spirale 2 de fibres de Kevlar. Selon une caractéristique de l'invention, la spirale est bobinée dans le sens inverse du mouvement de rotation à transmettre. C'est-à-dire que si le mouvement à transmettre est de sens dextorsum ou horaire, les fibres 2 sont bobinées dans le sens sinistrorsum ou anti-horaire. En effet, on désire utiliser les caractéristiques de résistance en traction du Kevlar pour transmettre un mouvement de rotation, ce qui est obtenu en bobinant les fibres de Kevlar 2. Les spires de Kevlar sont solidarisées avec le noyau 1, par exemple par collage. Le noyau 1 assure deux fonctions, la première étant de définir le centre du flexible et la seconde consistant dans le maintien des fibres de Kevlar. Le noyau 1 ne participe pas directement à la transmission de l'effort.

La spirale de Kevlar 2 est recouverte à l'extérieur d'une couche de Teflon 3 qui a pour but de faciliter la rotation du câble à l'intérieur de la gaine extérieure 6. Cette gaine peut être du type tuyau de douche, c'est-à-dire que les anneaux constituant la gaine peuvent s'interpénétrer sur une plus ou moins grande profondeur en fonction du mouvement qui est donné au flexible. La gaine 6 est de préférence réalisée en matière plastique, mais peut être également en métal à condition d'être convenablement isolée à ses deux extrémités.

De préférence, et afin de faciliter la rotation du Kevlar 2 l'intérieur de la gaine 6, on interpose, selon un pas déterminé, des rondelles 5 de Téflon formant palier de sorte que le mouvement de rotation ne rencontre pas d'autre résistance que celle des frottements du Téflon sur du Téflon.

Bien entendu, étant donné sa flexibilité, le dispositif de liaison 10 peut être disposé sur un enrouleur à retour automatique, lorsqu'il n'est pas en cours d'utilisation.

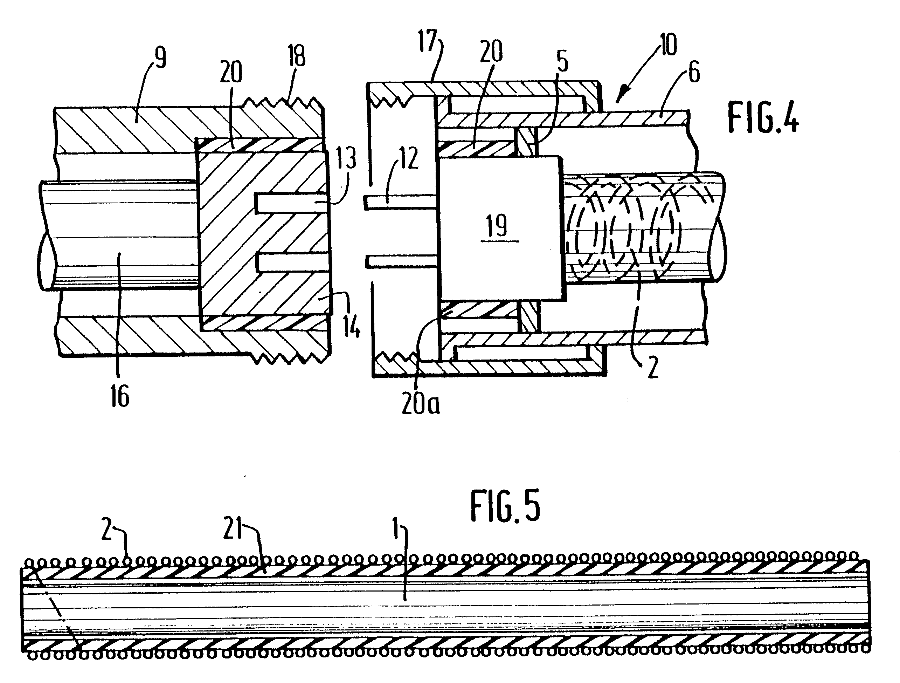

La Fig. 3 représente un exemple d'application et de mise en oeuvre d'un flexible selon l'invention permettant de réunir le moteur 7 qui, selon une caractéristique de l'invention, peut rester en un endroit fixe et éventuellement être fixé en cet endroit, et une perceuse à main 8 qui, dans l'exemple représenté, affecte la forme générale d'une perceuse ordinaire mais ne contient pas de moteur. Le flexible 10 est connecté entre deux culots à broches 9 dont l'un est représenté en coupe sur la Fig. 4.

Sur la Fig. 4 est représentée une liaison mécanique entre un flexible 10 et le culot 9 d'un appareil quelconque, ou du moteur 7. L'extrémité de la spirale de Kevlar 2 est emprisonnée dans une pièce cylindrique 19 présentant à sa partie antérieure au moins deux broches 12. La pièce 19 tourne librement dans un palier 20, par exemple une bague en Teflon solidaire d'un embout 20a fixé à l'extrémité de la gaine 6. L'embout 20a est entouré par une douille filetée 17. La douille filetée 17 se visse sur un filetage mâle 18 porté par le culot 9. La coopération de la douille 17 et du filetage 18 permet de solidariser le culot 9 et le flexible 10. Le culot 9 comprend une pièce cylindrique 14 affleurant sa surface extérieure, présentant des alésages borgnes 13 correspondant aux broches 12 et dans lesquels les broches 12 viennent s'insérer avant que le verrouillage soit effectué par la douille 17. La pièce 14 est montée comme la pièce 19 dans un palier 20 et est solidaire d'un arbre moteur relié à un outil quelconque.

Sur la Figure 5, est représentée la partie rotative du flexible, tournant à l'intérieur de la gaine (non représentée). Le noyau 1 est revêtu d'une couche 21 de matériau élastique durcissable à la compression sur laquelle sont bobinées les spirales 2. Lorsqu'un couple est transmis à l'une des extrémités du noyau, les spires ont tendance à diminuer de diamètre et une partie des torons comprime la couche 21 de sorte que chaque spire « creuse » son logement et est immobilisée dans celui-ci pendant toute la durée de la transmission du mouvement.

## Revendications

1. Dispositif de transmission d'un mouvement de rotation comprenant un noyau monté à rotation à l'intérieur d'une gaine fixe et sur lequel est enroulé en spirale (2) un toron de monofilaments de fibres thermoplastiques, caractérisé en ce que lesdites fibres sont en polyamide aromatique en ce que la spirale (2) est enrobée dans une couche (3) de matériau antifriction, et en ce que le sens de bobinage des fibres de polyamide aromatique est inverse du sens de rotation du mouvement à transmettre.

2. Dispositif selon la revendication 1, caractérisé en ce que des rondelles de matériau à faible coefficient de friction (5) sont interposées entre la gaine (6) et la couche antifriction (3).

3. Dispositif selon la revendication 1 ou 2, caractérisé en ce que la gaine extérieure flexible est incompressible, empêchant la partie mobile de se recouvrir par autospiralisation.

4. Dispositif selon l'une des revendications 1 ou 2, caractérisé en ce que le noyau (1), la spirale (2) et la couche (3) sont inclus dans une gaine fixe rigide, rigidement reliée à un organe moteur et à un organe utilisateur.

5. Dispositif selon l'une quelconque des revendications 1 à 4, caractérisé en ce que le noyau est constitué par des fibres parallèles de polyamide aromatique entourées par une gaine de fibres de verre.

6. Dispositif selon la revendication 5, caractérisé en ce que la gaine de fibres de verre présente une section hexagonale à six pans.

7. Dispositif selon la revendication 1, caractérisé en ce que sur le noyau sont enroulées au moins deux spirales parallèles (2) et de même sens, opposé au sens de transmission du mouvement de rotation.

8. Dispositif selon la revendication 1, caractérisé en ce que les spires forment, avec le plan de section transversale correspondant, un angle de l'ordre de 30°.

9. Dispositif selon l'une quelconque des revendications précédentes, caractérisé en ce qu'une spirale de quelques brins de polyamide aromatique maintient les spires en position sur le noyau (1), l'ensemble étant noyé dans un composite de polyuréthane ou de résine époxy.

10. Dispositif selon la revendication 1, caractérisé en ce que la spirale (2) est bobinée sur un noyau (1) solidaire d'une gaine (21) en matériau souple et élastique à fort coefficient de durcissement à la compression.

## Claims

1. Transmitting rotary motion device, comprising a core mounted inside a fixed sheath on which is fixed a coil of thermoplastic monofilaments fibers wound on said core, characterized in that said coil is constituted from aromatic polyamide monofilaments, in that the coil (2) is coated with a layer (3) of antifriction material, and in that the winding direction of the aromatic polyamid fibers is opposite to the direction of the rotary motion to be transmitted.

2. Device according to claim 1, characterized in that washers of low friction coefficient material (5) are interposed between the sheath (6) and the anti-friction layer (3).

3. Device according to claims 1 or 2, characterized in that the flexible outer sheath is incompressible, thereby preventing the moving portion from twisting into a spiral about itself.

4. Device according to claims 1 or 2, characterized in that the core (1), the spiral (2) and the layer (3) are included inside a fixed rigid sheath, which is rigidly connected to a drive member and to a driven member.

5. Device according to anyone of claims 1 to 4, characterized in that the core is constituted by parallel aromatic polyamide fibers surrounded by a sheath of glass fibers.

6. Device according to claim 5, characterized in that the sheath of glass fibers has a hexagonal cross-section with six flats.

7. Device according to claim 1, characterized in that at least two parallel spirals are wound in the same direction on the core, said direction being opposite to the direction of transmission of rotary motion.

8. Device according to claim 1, characterized in that the turns are at an angle of about 30° to the plane of the corresponding cross-section.

9. Device according to any preceding claims, characterized in that a spiral of a few aromatic polyamide strands holds the turns in position on the core (1), with the assembly being embedded in an epoxy resin or polyurethane composite.

10. Device according to claim 1, characterized in that the spiral (2) is wound around a core (1) which is fixed to a cover (21) made of flexible and resilient material having a high coefficient of compression hardening.

## Patentansprüche

1. Vorrichtung zur Übertragung einer Drehbewegung, welche einen Kern aufweist, der rotativ im Inneren einer festen Ummantelung angebracht ist, und auf den eine Einzelfadenlitze aus thermoplastischen Fasern in Form einer Spirale (2) aufgebracht ist, dadurch gekennzeichnet, daß die betrefenden Fasern aus aromatischem Polyamid sind, daß die Spirale (2) mit einer Schicht (3) Antifriktionswerkstoff umhüllt ist, und daß die Wicklungsrichtung der Fasern aus aromatischem Polyamid dem Umdrehungssinn der zu übertragenden Bewegung entgegengesetzt angelegt ist.

2. Vorrichtung nach Anspruch 1, dadurch gekennzeichnet, daß Scheiben aus einem Werkstoff mit geringem Reibungswert (5) zwischen der Ummantelung (6) und der Antifriktionsschicht (3) angebracht sind.

3. Vorrichtung nach Anspruch 1 oder 2, dadurch gekennzeichnet, daß die flexible Außenummantelung (6) nicht zusammendrückbar ist, wodurch ein Überziehen des beweglichen Teiles durch Selbstumwickelung verhindert wird.

4. Vorrichtung nach einem der Ansprüche 1 oder 2, dadurch gekennzeichnet, daß der Kern (1), die Spirale (2) und die Schicht (3) in einer festen, starren Ummantelung eingeschlossen sind, die starr mit einem Antriebsteil und einem Werkteil verbunden ist.

5. Vorrichtung nach irgendeinem der Ansprüche 1 bis 4, dadurch gekennzeichnet, daß der Kern aus mit einer Glasfiberhülle ummantelten, parallel angeordneten aromatischen Polyamidfasern besteht.

6. Vorrichtung nach Anspruch 5, dadurch gekennzeichnet, daß die Glasfiberhülle einen hexagonalen Querschnitt aufweist.

7. Vorrichtung nach Anspruch 1, dadurch gekennzeichnet, daß auf den Kern mindestens zwei parallele Spiralen (2) mit gleicher, dem Umdrehungssinn der zu übertragenden Bewegung entgegensetzter Wicklungsrichtung angebracht sind.

8. Vorrichtung nach Anspruch 1, dadurch gekennzeichnzet, daß die Spiralen mit der entsprechenden Querschnittfläche einen Winkel in der Größe von 30° bilden.

9. Vorrichtung nach irgendeinem der vorausgehenden Ansprüche, dadurch gekennzeichnet, daß eine Spirale aus einigen aromatischen Polyamidfäden die Windungen auf dem Kern (1) festhält und gleichzeitig der gesamte Teil in einen Polyurethanverbund oder Epoxiharz eingegossen ist.

10. Vorrichtung nach Anspruch 1, dadurch gekennzeichnet, daß die Spirale (2) in einem Stück mit einer Ummantelung (21) aus einem biegsamen und elastischen Werkstoff mit einem hohen Druckverfestigungswert um den Kern (1) gewickelt ist.

FIG.1

FIG.2

FIG.3

-7-

EP 0 202 309 B1

FIG.4

FIG.5